# EUROPEAN PATENT SPECIFICATION

(11) **EP 0 780 277 B1**
(45) Date of publication and mention of the grant of the patent: **06.03.2002**
(21) Application number: 96120186.0
(22) Date of filing: 16.12.1996
(51) Int. Cl.: B60T 8/40, H02K 23/40

(54) **Anti-lock braking system with six-pole pump motor**
Antiblockier-Bremsanlage mit sechspoligem Pumpenmotor
Système de frinage anti-blocage avec un moteur de pompe à six poles

(30) Priority: 21.12.1995 US 576797
(43) Date of publication of application: 25.06.1997
(73) Proprietor: SIEMENS CANADA LIMITED, Mississauga, Ontario L5N 7A6 (CA)
(72) Inventor: Lakerdas, Andrew L., London, Ontario N6J 4P1 (CA)
(74) Representative: Allen, Derek

(56) References cited:
- EP-A- 0 419 293
- EP-A- 0 643 468
- EP-A- 0 645 875
- DE-A- 2 263 170
- US-A- 3 690 738
- US-A- 4 554 474
- US-A- 5 208 482
- J.-P. BROTHIER: "technologie du freinage abs" 1994 , E.T.A.I. DITIONS TECHNIQUES POUR L'AUTOMOBILE ET L'INDUSTRIE , BOULOGNE-BILLANCOURT (FRANCE) XP002083139 208740 * page 51 - page 69 *
- F. YEAPLE: "Permanent-magnet dc motors are moving into bigger roles" PRODUCT ENGINEERING, vol. 44, no. 1, January 1973, pages 40-43, XP002083138
- PATENT ABSTRACTS OF JAPAN vol. 095, no. 002, 31 March 1995 -& JP 06 305408 A (HITACHI LTD;OTHERS: 01), 1 November 1994

## Description

### FIELD OF THE INVENTION

The present invention relates to an anti-lock braking system including a six-pole electric pump motor. In particular, the present invention relates to a six-pole motor to provide shaft power to drive an anti-lock braking system pump in an automotive application.

### BACKGROUND OF THE INVENTION

Anti-lock braking systems (ABS) for automotive applications demand high-performance components of reduced size and weight. One significant component is the motor for the ABS pump, which must be able to generate sufficient hydraulic pressure to modulate the braking elements of the vehicle when the ABS mode is invoked during vehicle braking. The ABS pump must replace the pressure that was developed at the brake pedal by the vehicle operator, which pressure is released upon activation of the ABS. The pressure must be generated by the ABS pump quickly enough to provide braking force for slowing or stopping the vehicle. The power required from the motor to operate the ABS pump is relatively substantial, although design constraints generally limit the ABS pump motor size.

Two-pole motors or four-pole electric motors have been used for ABS pumps. Two-pole motors include only two distinct magnet pieces, brushes, bus bars and brush holders. However, two-pole motors generally require a stator (housing) of greater thickness, and therefore are of greater weight (or mass). Four-pole motors include four distinct magnet pieces, brushes, bus bars, and brush holders. The stator of a four-pole motor can be of lesser thickness, but there are more associated components (magnet pieces, brushes, bus bars, etc.). Furthermore, for the conventional lap wound armature assembly, there is some amount of end wire at the end of each winding, which must be accommodated within the motor housing, although it provides no recoverable energy.

It would be advantageous for the ABS pump motor to be as small compact as possible because of the size and weight constraints posed in automotive applications (e.g., the ABS pump must fit in or near the engine component of the vehicle) and because of packaging costs and other factors. It is not believed that the known systems allow for an optimum size and weight for an ABS pump motor in an automotive application. J.-P. BROTER in "Technologie du freinage ABS' 1994, E.T.A.I. ÉDITIONS TECHNIQUES POUR L'AUTOMOBILE ET L'INDUSTRIE, BOULOGNE-BILLANCOURT discusses ABS braking technology. US-A-5 208 482 (ISOZUMI SHUZOO) provides an electric vehicle starter motor; US-A-3 690 738 (INGRAM BRIAN ET AL) teaches of an anti-skid arrangement. Accordingly, it would be advantageous to employ an electric motor, adapted for use with an ABS pump, that is lighter in weight, smaller in size, and of relatively simple assembly, but that provided comparable or improved performance in comparison to conventional two-pole or four-pole ABS pump motors in an automotive application.

The present invention provides an anti-locking braking system for a vehicle having a plurality of rotating wheels, which comprises:
a plurality of braking elements actuated by an input of the plurality of rotating wheels for slowing the rotational speed of each of the plurality of rotating wheels;
a plurality of wheel-speed detectors coupled to each of the plurality of rotating wheels for detecting the individual rotational speed of each of the plurality of rotating wheels and for generating an activation signal representative of a difference therebetween;
a hydraulic control unit for controlling the input of the hydraulic fluid to the braking elements and for modulating the input of the hydraulic fluid in response to the activation signal;
a hydraulic pump for pressurising the hydraulic fluid supplied by the hydraulic control unit; and
a dedicated pump motor; characterised in that the motor has a six-pole magnetic circuit adapted to supply power to the hydraulic pump, the motor comprising an armature assembly rotatably received within the stator assembly including a plurality of wire windings arranged in a wave-winding pattern and a commutator at which the plurality of wire windings originate and make electrical contact.

Figure 1 is a system diagram of an anti-lock braking system including the electric motor;
Figure 2 is a cut-away perspective view of the six-pole motor;
Figure 3 is an exploded view of the six-pole motor;
Figure 4 is an exploded view of an armature assembly of the six-pole motor (without the magnet wire);
Figure 5 is a schematic cross-sectional representation of a stator assembly and armature assembly of the six-pole motor;
Figure 6 is a schematic cross-sectional representation of the magnetic field lines in a two-pole motor;
Figure 7 is a schematic cross-sectional representation of the magnetic field lines in a four-pole motor;
Figure 8 is a schematic representation of the wave winding pattern for the armature assembly of the six-pole motor.

### DETAILED DESCRIPTION OF THE PREFERRED EMBODIMENTS

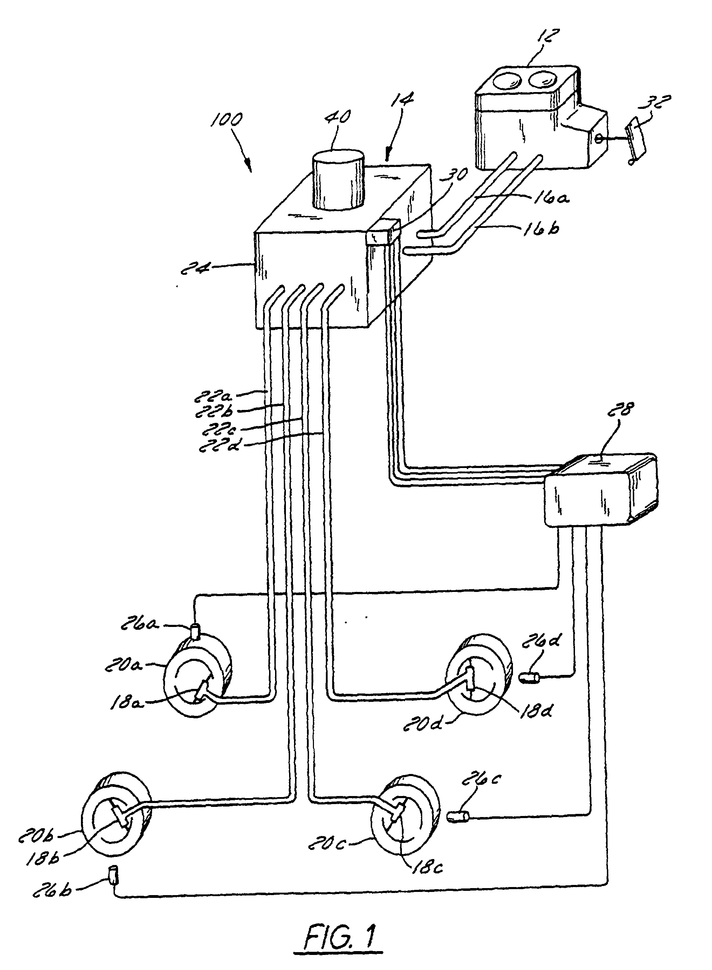

Referring to the FIGURES, FIGURE 1 shows a schematic diagram of a preferred embodiment of an anti-lock braking system 100 ("ABS" or "system") for an automotive application. System 100 includes a master cylinder 12 (within which a hydraulic fluid is contained) coupled to a hydraulic control unit 14 by a series of two hydraulic lines 16a and 16b (i.e. front and rear lines). The system also includes four braking elements 18a through 18d, one for each of four rotating wheels 20a through 20d, actuated by an input of hydraulic fluid and coupled to hydraulic control unit 14 by a series of four hydraulic output lines 22a through 22d (one for each of wheels 20a through 20d). Hydraulic control unit 14 is contained within a pump block 24 and includes an ABS pump (not shown) and four solenoids (not shown) controlling each of four valves (not shown) regulating the flow of hydraulic fluid to each of four braking elements 18a through 18d for each of wheels 20a through 20d. The ABS pump, contained within pump block 24, is actuated by an electric ABS pump motor 40.

System 100 also includes a set of four wheel-speed sensors 26a through 26d, one for each of wheels 20a through 20d, that provide an input signal corresponding to the rotational speed of each wheel to an electronic control unit 28. Electronic control unit 28 provides a control signal (relating to the difference in respective wheel speeds) to an electronic receiving module 30 coupled to hydraulic control unit 14, which operates the braking system.

As is known to those of ordinary skill in the art, in conventional operation, braking of the vehicle (not shown) is effected when the vehicle operator (not shown) manually depresses brake pedal 32, which provides a flow of hydraulic fluid under pressure from master cylinder 12 through hydraulic control unit 14 to each of braking elements 18a through 18d, slowing the rotational speed of the corresponding wheels 20a through 20d (and therefore the speed of the vehicle).

As is also known to those of ordinary skill in the art, the anti-lock braking system is activated when electronic control unit 28 detects (based on the input signal from wheel-speed sensors 26a through 26d) during braking that at least one wheel is rotating at a speed that is different from at least the speed at which one other wheel is rotating. This activates the "ABS mode" of operation. Electronic control unit 28 then provides a control signal to electronic receiving module 30 that activates the ABS pump and pressurizes the hydraulic fluid irrespective of the amount of pressure developed by the vehicle operator at brake pedal 32 (which pressure may be released in ABS mode operation). Electronic receiving module 30 also modulates (through the actuation of solenoids corresponding to hydraulic control valves) the flow of hydraulic fluid to braking elements 18a through 18d. In common operation in ABS mode, the modulation of the braking elements provided during activation of the anti-lock braking system will result in an equalization of the speeds of each of wheels 20a and 20d during braking, to generally prevent any one wheel from locking. Accordingly, the ABS pump motor 40 must be able to generate enough energy for this function.

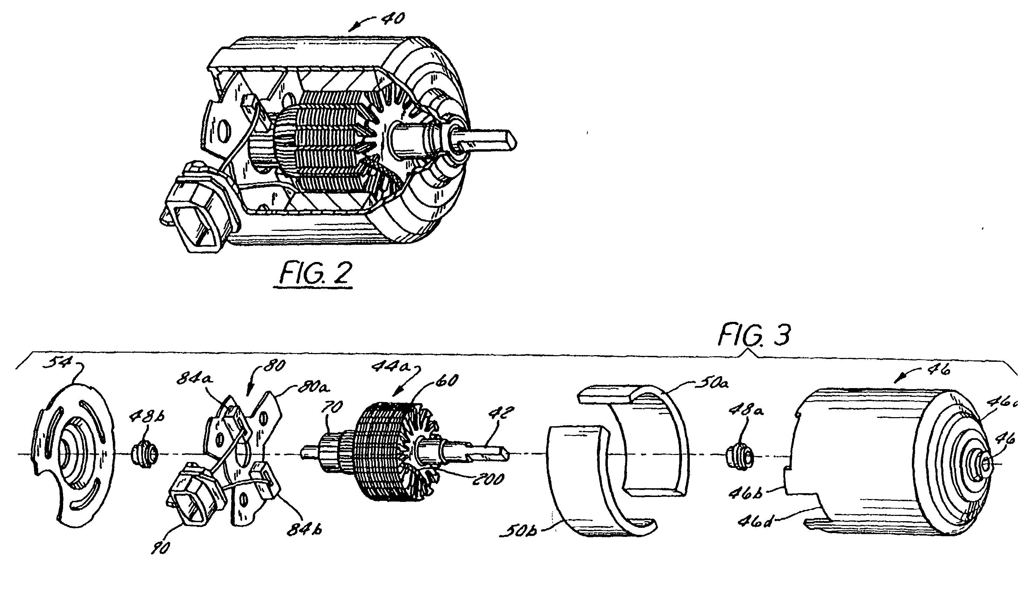

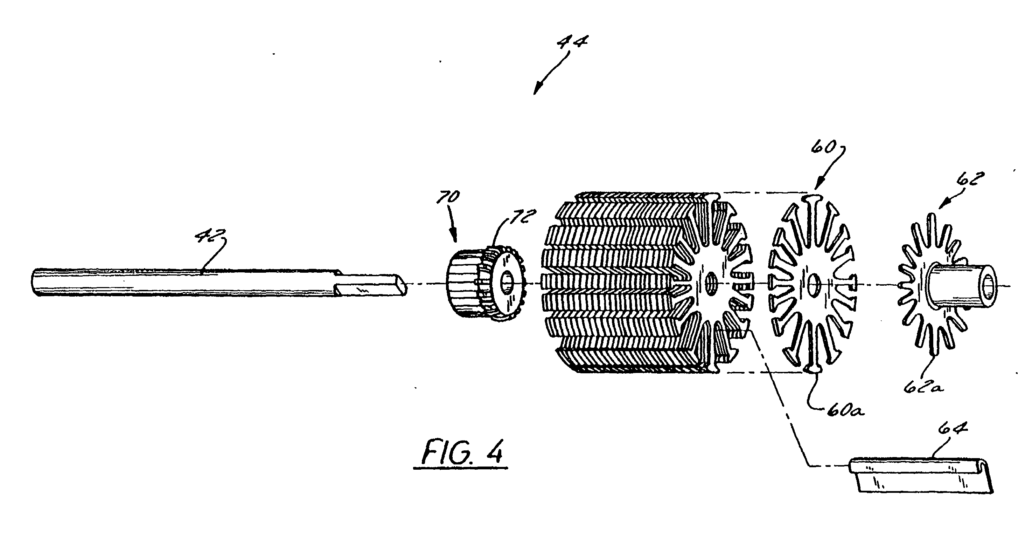

Referring to FIGURE 2, a preferred embodiment of ABS pump motor 40, a motor adapted for particular suitability in an ABS application, is shown in a cut-away view. In FIGURE 3 a preferred embodiment of motor 40 is shown in an exploded view. As shown in FIGURES 2 and 3, extending through the center of motor 40 is a shaft 42 (shown in FIGURE 2 as part of armature assembly 44), which transmits power from motor 40 to the ABS pump (not shown). FIGURE 3 further reveals a housing 46, a first bearing 48a, a pair of magnets 50a and 50b, an armature assembly 44, a brush card assembly 80, a second bearing 48b and an end cap 54.

Metal housing 46 is of a hollow cylindrical shape and is partially closed at a first end 46a and open at a second end 46b. At first end 46a of housing 46 is a round hole 46c through which a first end 46a of shaft 42 partially extends, encompassed by bearing 48a. Magnets 50a and 50b, which are of an arcuate shape, are received and mounted within the interior perimeter of housing 46 (in an opposed configuration as shown in FIGURE 3), forming what is commonly known to those of skill in the art as a stator assembly. Armature assembly 44 is then rotatably received within the stator assembly in an cylindrical space within magnets 50a and 50b, followed by brush card assembly 80, bearing 48b and end cap 54, all as shown in FIGURES 2 and 3.

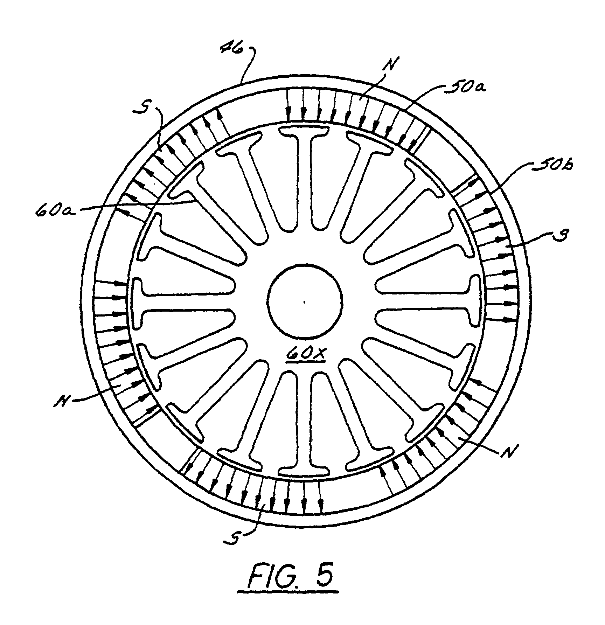

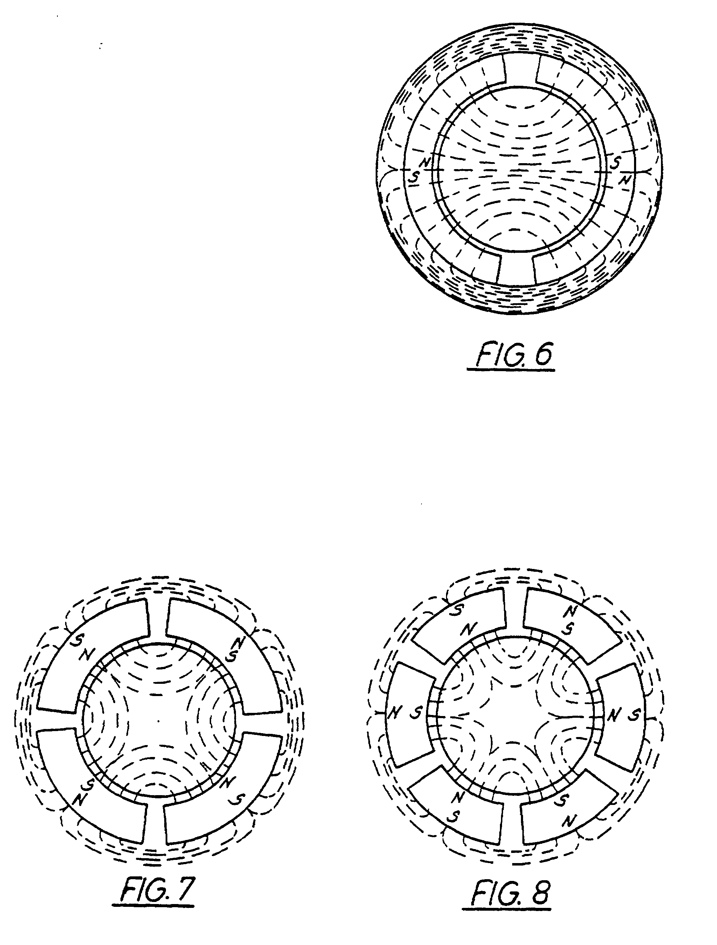

According to the preferred embodiment of motor 40, magnets 50a and 50b are charged as a six-pole magnetic circuit, with each magnet segment having three separate magnet poles (NORTH-SOUTH), as shown in FIGURE 5. (In FIGURES 5 through 8, "N" designates the region given a magnetic polarity of NORTH and "S" designates a region given a magnetic polarity of SOUTH.) This arrangement achieves the advantage of generally better economy and simplicity of manufacture and installation in comparison to motors using a greater number of magnet segments. In the preferred embodiment, magnets 50a and 50b are formed from two ferrous arc segments (as shown in FIGURES 3 and 5). In alternative embodiments, a plurality of magnets of any suitable material known to those of skill in the art can be used. There may be used perhaps three magnet segments or six magnet segments (shown in FIGURE 8), provided the segments are charged as a six-pole magnetic circuit. In any embodiment, the magnet segments can be charged either individually or at a subsequent stage of assembly of motor 40. (In a particularly preferred embodiment, charging is effected after complete assembly of the motor.)

Referring now to FIGURE 4, the components of armature assembly 44 according to the preferred embodiment are shown in greater detail. Armature assembly 44 includes thoroughgoing shaft 42, which extends through the center of a generally cylindrical shaped commutator 70, a set (or stack) of laminations (shown for example by reference numeral 60) and an end insulator 62. Each lamination has a set of sixteen teeth (radial extensions shown by reference numeral 60a), which are of "T"-shaped and extend from a central core 60x. As shown in FIGURES 2 through 4, the teeth 60a of laminations 60 are maintained in axial alignment, forming a series of sixteen generally "V"-shaped lengthwise spaces along the axial direction of shaft 42. A generally "V"-shaped slot insulator (shown by reference numeral 64) is installed into each of these lengthwise spaces. End insulator 62 has an equal number of radial projections (identified by reference numeral 62a) as each lamination, and is oriented in axial alignment with the laminations 60. As shown for example in detail in FIGURE 2, a series of wire windings (one is designated by reference numeral 200 in FIGURE 3) are made around the teeth 60a of laminations 60. The slot insulators combine with end insulator 62 to generally prevent electrical contact between the wires of the armature winding and laminations 60. (These laminations can also be coated with an insulating material, such as a epoxy.)

Motor 40 includes commutator 70 of a construction known to those of ordinary skill in the art. Commutator 70 includes a series of sixteen bar segments (an exposed metal contact shown for example by reference numeral 72), each of which contains a hook (not evident) that retains and makes electrical contact with wires used in the armature winding. In a particularly preferred embodiment, the commutator body is formed from a plastic phenolic material that provides electrical insulation for the wires used in the winding. Each of the wires used in the armature winding originate at a bar segment (shown for example as reference numeral 72) of commutator 70 and run between teeth of the laminations along a slot insulator and loop around end insulator 62; the wires return along another slot insulator between another set of teeth of the laminations and terminate at another bar segment of commutator.

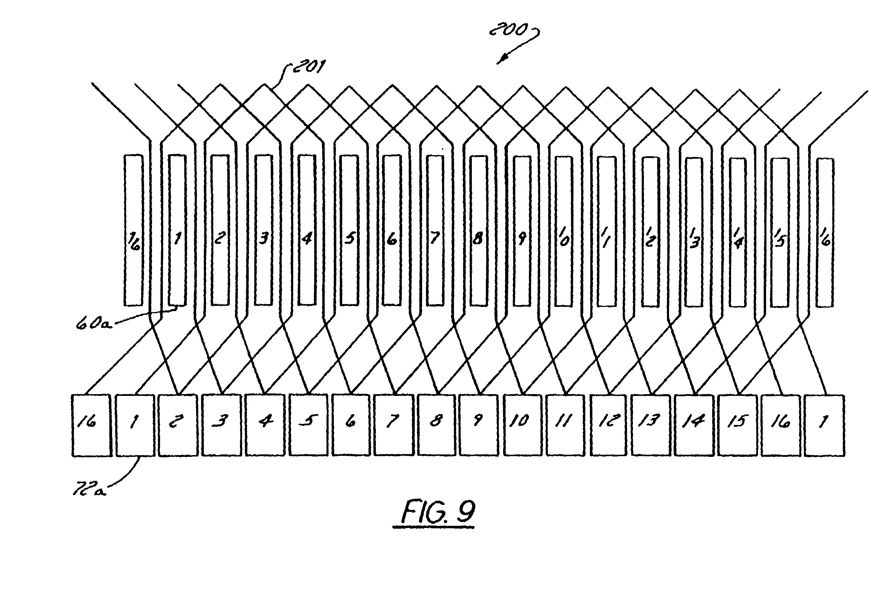

Armature assembly 44 incorporates a so-called wave wind pattern instead of a conventional lap-wind pattern. The wave-winding arrangement for armature assembly 44 is shown schematically in FIGURE 9, wherein the blocks numbered 1 to 16 correspond to the sixteen bar segments (72) of commutator 70, the elongated blocks numbered 1 to 16 correspond to the teeth (60a) of lamination 60, and the lines correspond to wire coils within armature assembly 44. As is shown in FIGURE 9, a continuous wire coil (designated as reference numeral 201 in FIGURE 9) is wound from the first bar segment of commutator 70 along a slot between the first and second lamination teeth, around the end insulator then back along a slot between the fourth and fifth lamination teeth (each winding can be repeated until the desired number of turns per coil is achieved), and then electrically connects at the sixth bar segment of commutator 70. As shown in FIGURE 9, the wire coil then continues on between the sixth and seventh lamination teeth, between the ninth and tenth lamination teeth, to the eleventh bar segment of commutator 70 (where it electrically connects), then on between the eleventh and twelfth lamination teeth, between the fourteenth and fifteenth lamination teeth to the sixteenth bar segment of commutator 70 (where it electrically connects). This pattern is repeated until the entire armature assembly (44) is wound (i.e. all slots are filled), as is shown in FIGURE 9. As is known to those of ordinary skill in the art, the number of coils and direction of the wire windings can be adapted to the particular needs for motor performance.

Referring to FIGURE 3, brush card assembly 80 includes a brush card 80a onto which is mounted a pair of brushes (not shown) each within corresponding brush tubes 84a and 84b, respectively, a busbar (not shown or a wire as shown) and a connector 90. The brushes each have an exposed contact (not shown) for commutation, which can be pressed into electrical contact with bar segments of commutator 70 by a spring (not shown). Brush card assembly 80 is installed within housing 46 as shown in FIGURES 2 and 3. Referring now back to FIGURES 2 and 3, it is shown that connector 90 of brush card assembly 80 extends through a cut-out 46d at the second end 46b of housing 46. Electrical connection is made to motor 40 by connector 90 from an external power source (not shown).

Armature assembly 44, commutator 70, and shaft 42 rotate within the stator assembly when electrical current is supplied to the wiring. Electrical connection is made to the bar segments of commutator 70 through the exposed contacts on brushes on the stationary brush card assembly 80, which energizes armature assembly 44 and induces the rotation of armature assembly 44, providing output power (torque) at shaft 42 for driving the ABS pump.

For purposes of automotive applications, an ABS pump motor, must satisfy difficult size and weight (space) constraints. According to any particularly preferred embodiment, motor 40 may be configured in a smaller and lighter arrangement than a two-pole (or four-pole) motor of comparable shaft power (and housing diameter). For example, in a representative arrangement with a housing diameter of three inches, the six-pole motor would fit within a housing that has an axial length of three inches and a thickness of 0.033 inches; a comparable two-pole motor would have an axial length of four inches and a housing thickness of 0.1 inches.

A reduction in the axial length of motor 40 is possible because the six-pole motor employs a wave-winding pattern which reduces the amount of end wire (i.e., the sections of wire extending from one slot insulator to the next over the end insulator within the armature assembly); by comparison, a two-pole motor would generally use a winding pattern (lap winding) that results in a greater amount of end wire (or chordal section). The chordal section of armature end wire is reduced in a six-pole motor, in comparison with a two-pole motor or four-pole motor, as shown in TABLE 1. End wire lengths must be accommodated within the end of the motor housing, but provides no recoverable energy from motor 40.

**TABLE 1**

| Motor Configuration (number of poles) | Chordal Section (degrees) |
|---|---|
| 6 | 60 |
| 4 | 90 |
| 2 | 180 |

The shortened chordal section in the six-pole motor not only also increases the recoverable energy as a function of overall wire length but also reduces the length of end wire in the armature assembly. As a result, for a motor of given housing axial (or overall) length, a six-pole motor configuration allows for a greater axial length of armature stack (number or thickness of stacked laminations). Lengthening the relative amount of wire in the axial direction while reducing end wire lengths increases motor efficiency and therefore produces a more powerful motor for a given axial length. In a particularly preferred embodiment, the axial length of motor 40 can therefore be reduced to match the size constraints encountered in the intended ABS application.

As shown in FIGURES 2 and 3, use of the wave winding pattern in armature assembly 44 (instead of the conventional lap winding) provides other advantages: With at least certain lap-wound motors there must be as many brushes as magnet poles and, correspondingly, as many parallel electrical paths. For example, a six-pole motor with a lap winding would need six brushes and would have six parallel electrical paths. The wave winding pattern allows a multiple number of poles but requires a number of fewer brushes for motor operation; in the preferred embodiment of motor 40 there are six poles and two brushes. Consequently, there are only two parallel electrical paths in motor 40. Features that are normally a disadvantage with a wave-winding pattern (i.e. reduced brush life due to poorer commutation) are not such a concern with ABS pump motors, because the application requires only short duty cycle requirements, and therefore results in less wear between the brushes and commutator.

In the six-pole motor according to the preferred embodiment, the thickness of magnets 50a and 50b can be reduced in comparison to a two-pole motor of comparable output power. A six-pole motor requires only one-third the stator thickness of a two-pole motor and two-thirds the stator thickness of a four-pole motor, because the amount of magnetic flux that must be transmitted through the stator perimeter (path of magnetic reluctance) is reduced. The magnetic field lines for a six-pole motor are show in FIGURE 8; the magnetic field for conventional two-pole and four-pole motors, respectively, is shown in FIGURES 6 and 7. Therefore the overall motor weight is reduced. In one embodiment, the six-pole motor would weigh approximately 1.5 pounds in comparison to approximately 2.0 pounds for a comparable two-pole motor. The use of a thinner magnet (reduced radial thickness) for a six-pole motor than for a two-pole or four-pole motor also reduces magnet cost and allows for a larger armature diameter providing more torque for a given housing diameter. The six-pole motor according to the preferred embodiment is further less susceptible to having the armature reaction demagnetize magnets 50a and 50b because the duty cycle of motor 40 is reduced in its intended application in the ABS pump.

It is understood that, while the detailed drawings, specific examples, and particular components values given describe preferred embodiments of the present invention, they serve the purpose of illustration only. The apparatus of the invention is not limited to the precise details and conditions disclosed. Further, although particular shapes and aperture dimensions have been shown, various other shapes, geometries and dimensions could be utilized for the various components of the motor. Other substitutions, modifications, changes and omissions may be made in the design, operating conditions and arrangement of the preferred embodiments without departing from the scope of the invention as expressed in the appended claims.

## Claims

1. An anti-locking braking system (100) for a vehicle having a plurality of rotating wheels, (20 a-d) which comprises:
a plurality of braking elements (18 a-d) actuated by an input of the plurality of rotating wheels for slowing the rotational speed of each of the plurality of rotating wheels;
a plurality of wheel-speed detectors (26 a-d) coupled to each of the plurality of rotating wheels for detecting the individual rotational speed of each of the plurality of rotating wheels and for generating an activation signal representative of a difference therebetween;
a hydraulic control unit (14) for controlling the input of the hydraulic fluid to the braking elements and for modulating the input of the hydraulic fluid in response to the activation signal;
a hydraulic pump for pressurising the hydraulic fluid supplied by the hydraulic control unit; and
a dedicated pump motor (40); **characterised in that** the motor has a six-pole magnetic circuit adapted to supply power to the hydraulic pump, the motor comprising an armature assembly (44) rotatably received within the stator assembly including a plurality of wire windings arranged in a wave-winding pattern and a commutator (70) at which the plurality of wire windings originate and make electrical contact.

2. The system according to Claim 1 wherein the motor further comprises:
a stator assembly formed by a housing (46) having a generally cylindrical axial bore and a plurality of generally arcuate magnet segments (50 a,b) fixed within the perimeter of the axial bore of the housing;
a brush card assembly (80) mounted within the housing having a pair of brushes which make electrical contact with the commutator during rotation of the armature assembly; and
a drive shaft (42) rotating with the armature assembly and coupled to the hydraulic pump.

3. The system according to Claim 2 wherein the armature assembly includes a plurality of laminations (60) and a plurality of slot insulators forming a plurality of slots for armature windings.

4. The system according to Claim 1 wherein the motor includes two magnet segments.

5. The system according to Claim 1 wherein the motor includes three magnet segments.

6. The system according to Claim 1 wherein the motor includes six magnet segments.

7. The system according to Claim 1 wherein the motor includes magnet segments of a ferrous material.

8. The system according to Claim 1 wherein the motor includes magnet segments of a permanent magnet material.

## Patentansprüche

1. Antiblockiersystem (100) für ein Fahrzeug mit mehreren sich drehenden Rädern (20 a-d), das folgendes umfaßt:
mehrere Bremselemente (18 a-d), die durch ein Eingangssignal der mehreren sich drehenden Räder zur Verlangsamung der Drehgeschwindigkeit jedes der mehreren sich drehenden Räder betätigt werden;
mehrere Raddrehzahlsensoren (26 a-d), die mit jedem der mehreren sich drehenden Räder zur Erfassung der individuellen Drehzahl jedes der mehreren sich drehenden Räder und zur Erzeugung eines eine Differenz dazwischen darstellenden Aktivierungssignals verbunden sind;
eine hydraulische Steuereinheit (14) zur Steuerung der Zufuhr der Hydraulikflüssigkeit zu den Bremselementen und zur Regelung der Zufuhr der Hydraulikflüssigkeit als Reaktion auf das Aktivierungssignal;
eine Hydraulikpumpe zur Druckbeaufschlagung der von der hydraulischen Steuereinheit zugeführten Hydraulikflüssigkeit; und
einen eigenen Pumpenmotor (40), **dadurch gekennzeichnet, daß** der Motor einen sechspoligen Magnetkreis aufweist, der zur Energieversorgung der Hydraulikpumpe ausgeführt ist, wobei der Motor eine Ankeranordnung (44) umfaßt, die drehbar in der Statoreinheit aufgenommen ist und mehrere in einem Wellenwicklungsmuster angeordnete Drahturicklungen und einen Stromwender (70) enthält, an dem die mehreren Drahtwicklungen ihren Ursprung haben und elektrischen Kontakt herstellen.

2. System nach Anspruch 1, bei dem der Motor weiterhin folgendes umfaßt:
eine durch ein Gehäuse (46) gebildete Statoranordnung mit einer allgemein zylindrischen Axialbohrung und mehreren allgemein bogenförmigen Magnetsegmenten (50 a,b), die innerhalb des Umfangs der Axialbohrung des Gehäuses befestigt sind;
eine im Gehäuse angebrachte Bürstenkartenanordnung (80) mit einem Paar Bürsten, die bei Drehung der Ankeranordnung einen elektrischen Kontakt mit dem Stromwender herstellen; und
eine sich mit der Ankeranordnung drehende Antriebswelle (42), die mit der Hydraulikpumpe verbunden ist.

3. System nach Anspruch 2, bei dem die Ankeranordnung mehrere Bleche (60) und mehrere Schlitzisolatoren enthält, die mehrere Schlitze für Ankerwicklungen bilden.

4. System nach Anspruch 1, bei dem der Motor zwei Magnetsegmente enthält.

5. System nach Anspruch 1, bei dem der Motor drei Magnetsegmente enthält.

6. System nach Anspruch 1, bei dem der Motor sechs Magnetsegmente enthält.

7. System nach Anspruch 1, bei dem der Motor Magnetsegmente aus einem Eisenmetall enthält.

8. System nach Anspruch 1, bei dem der Motor Magnetsegmente aus einem Dauermagnetwerkstoff enthält.

## Revendications

1. Système (100) de freinage anti-blocage d'un véhicule ayant une pluralité de roues (20a à 20d) tournantes, qui comprend :
une pluralité d'éléments (18a à 18d) de freinage actionnés par une entrée de la pluralité des roues tounantes pour ralentir la vitesse de rotation de chacune de la pluralité des roues tournantes ;
une pluralité de détecteurs (26a à 26d) de la vitesse des roues couplés à chacune de la pluralité des roues tournantes, et destinés à détecter la vitesse individuelle de rotation de chacune de la pluralité des roues tournantes et à engendrer un signal d'activation représentatif d'une différence entre elles ;
une unité (14) hydraulique de commande destinée à commander l'entrée du fluide hydraulique aux éléments de freinage et à moduler l'entrée du fluide hydraulique en fonction du signal d'activation ;
une pompe hydraulique destinée à mettre sous pression le fluide hydraulique fourni par l'unité hydraulique de commande ; et
un moteur (40) de pompe dédié ; **caractérisé en ce que** le moteur a un circuit magnétique à six pôles agencé pour fournir de l'énergie à la pompe hydraulique, le moteur comprenant une armature (44) reçue à rotation dans le stator, qui comprend une pluralité d'enroulements de fils disposés dans une configuration d'enroulement ondulés et un collecteur (70) dont part la pluralité des enroulements de fils et qui fait le contact électrique.

2. Système suivant la revendication 1, dans lequel le moteur comprend en outre :
un stator formé par une enveloppe (46) ayant un alésage axial de forme générale cylindrique et une pluralité de segments (50a, 50b) d'aimant généralement arqués fixés dans le périmètre de l'alésage axial de l'enveloppe ;
une carte (80) à balai montée dans l'enveloppe et ayant une paire de balais qui fait le contact électrique avec le collecteur pendant la rotation de l'armature, et
un arbre (42) d'entraînement tournant avec l'armature et couplé à la pompe hydraulique.

3. Système suivant la revendication 2, dans lequel l'armature comprend une pluralité de strates (60) et une pluralité d'isolateurs à fentes formant une pluralité de fentes pour les enroulements de l'armature.

4. Système suivant la revendication 1, dans lequel le moteur comprend deux segments d'aimant.

5. Système suivant la revendication 1, dans lequel le moteur comprend trois segments d'aimant.

6. Système suivant la revendication 1, dans lequel le moteur comprend six segments d'aimant.

7. Système suivant la revendication 1, dans lequel le moteur comprend des segments d'aimant en matériau ferreux.

8. Système suivant la revendication 1, dans lequel le moteur comprend des segments d'aimant en un matériau d'aimant permanent.
